(19) Europäisches Patentamt / European Patent Office / Office européen des brevets

(11) **EP 4 484 890 B1**

(12) **EUROPEAN PATENT SPECIFICATION**

(45) Date of publication and mention
of the grant of the patent:
**22.04.2026 Bulletin 2026/17**

(21) Application number: **23181415.3**

(22) Date of filing: **26.06.2023**

(51) International Patent Classification (IPC):
*G01C 17/00* $^{(2006.01)}$     *G01C 19/5776* $^{(2012.01)}$

(52) Cooperative Patent Classification (CPC):
**G01C 17/00; G01C 19/5776**

(54) **METHOD FOR DETERMINING THE ORIENTATION OF A DRONE**

VERFAHREN ZUR BESTIMMUNG DER AUSRICHTUNG EINER DROHNE

PROCÉDÉ DE DÉTERMINATION DE L'ORIENTATION D'UN DRONE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**01.01.2025 Bulletin 2025/01**

(73) Proprietor: **Murata Manufacturing Co., Ltd.
Nagaokakyo-shi, Kyoto 617-8555 (JP)**

(72) Inventors:
• **FINNE, Antti
01610 Vantaa (FI)**
• **KOSTIAINEN, Pekka
00750 Helsinki (FI)**

(74) Representative: **Boco IP Oy Ab
Kansakoulukatu 3
00100 Helsinki (FI)**

(56) References cited:
• PRIKHODKO IGOR P ET AL: "What is MEMS Gyrocompassing? Comparative Analysis of Maytagging and Carouseling", JOURNAL OF MICROELECTROMECHANICAL SYSTEMS, IEEE SERVICE CENTER, US, vol. 22, no. 6, 1 December 2013 (2013-12-01), pages 1257 - 1266, XP011532835, ISSN: 1057-7157, [retrieved on 20131125], DOI: 10.1109/JMEMS.2013.2282936

• IOZAN L I ET AL: "Paper;Using a MEMS gyroscope to measure the Earth s rotation for gyrocompassing applications;Using a MEMS gyroscope to measure the Earth's rotation for gyrocompassing applications", MEASUREMENT SCIENCE AND TECHNOLOGY, IOP, BRISTOL, GB, vol. 23, no. 2, 11 January 2012 (2012-01-11), pages 25005, XP020217812, ISSN: 0957-0233, DOI: 10.1088/0957-0233/23/2/025005

• CHIN E. LIN ET AL: "Camera Gimbal Control from UAV Autopilot Target Tracking", JOURNAL OF AERONAUTICS, ASTRONAUTICS AND AVIATION, 1 March 2015 (2015-03-01), XP093111520, Retrieved from the Internet <URL:https://www.researchgate.net/publication/282712738_Camera_gimbal_control_from_UAV_autopilot_target_tracking> [retrieved on 20231212], DOI: 10.6125/14-0113-831

• RUMEN ARNAUDOV ET AL: "Earth rotation measurement with micromechanical yaw-rate gyro; Earth rotation measurement with micromechanical yaw-rate gyro", MEASUREMENT SCIENCE AND TECHNOLOGY, IOP, BRISTOL, GB, vol. 16, no. 11, 1 November 2005 (2005-11-01), pages 2300 - 2306, XP020090461, ISSN: 0957-0233, DOI: 10.1088/0957-0233/16/11/024

• LE GALL QUENTIN: "The Usage of Gyros in North Finding Systems", 1 January 2017 (2017-01-01), XP093109717, Retrieved from the Internet <URL:https://www.diva-portal.org/smash/get/diva2:1110826/FULLTEXT01.pdf> [retrieved on 20231206]

EP 4 484 890 B1

**Description**

FIELD OF THE DISCLOSURE

This disclosure relates to small, remote-controlled aerial vehicles, also known as drones. More specifically, the disclosure relates to methods for determining the geographical heading of a drone, which may also be called the orientation of the drone with respect to the points of the compass.

BACKGROUND OF THE DISCLOSURE

Drones can be used for filming, mapping, parcel delivery and many other applications. Small drones can be transported to a location of use and then launched without any kind of dedicated launch platform. Drones often include camera devices which may record images or video when the drone is in flight.

In some applications, a flying drone remains within the range of vision of the user who controls the drone. In this case the user may steer the drone based on direct visual observation. However, there are many applications where the desired operating range of a drone exceeds the range of vision of the user. Steering based on direct visual observation is then not possible.

Drones that execute automatic or semi-automatic navigation are known. A user may program a drone to follow a predetermined route and then return to the launch point (or land at some other location). The drone needs some form of navigation system to perform this task. The system may be a GNSS receiver unit which allows the drone to navigate with the help of the Global Navigation Satellite System.

However, in order to navigate by GNSS, drones typically have to fly for a brief moment so that an initial direction of flight can be ascertained. When this initial direction is known, the flight path can gradually be corrected, and the drone can start to follow the predetermined route. But this navigation-initializing flight phase can be problematic in confined spaces, for example in cities where high buildings may restrict the possibility of free movement and block GNSS signals. The drone may have to fly above the surrounding rooftops before it can determine its geographical heading sufficiently accurately to pick up the desired route.

This is inconvenient and time-consuming.

Document WO2017094000 discloses a drone navigation system where the onboard position sensors are augmented by a pseudo-GPS signal provided by a ground-based remote sensor. However, it is cumbersome to always use an additional remote sensor when a drone is used, and the remote sensor only determines the movement of the drone relative to said sensor. If the heading of the drone is to be determined with respect to the points of the compass, then the relative position of the remote sensor with respect to the drone must first be measured with a compass.

PRIKHODKO IGOR P ET AL: "What is MEMS Gyrocompassing? Comparative Analysis of May tagging and Carouseling", JOURNAL OF MICROELECTROMECHANICAL SYSTEMS, IEEE SERVICE CENTER, US, vol. 22, no. 6, 1 December 2013 (2013-12-01), pages 1257-1266, relates to north-finding based on micromachined gyroscopes. The paper analyzes north-finding methods and demonstrates a measured 4 mrad standard deviation azimuth uncertainty using an in-house developed vibratory silicon MEMS quadruple mass gyroscope (QMG).

It would be useful to be able to determine the orientation of a drone in relation to the points of the compass without any additional remote equipment. The drone could then start following the predetermined route without an extended initialization phase.

BRIEF DESCRIPTION OF THE DISCLOSURE

An object of the present disclosure is to provide a method which overcomes the problem presented above.

The object of the disclosure is achieved by a method which is characterized by what is stated in the independent claim. The preferred embodiments are disclosed in the dependent claims.

The disclosure is based on the idea of having the drone determine its geographical heading with a gyrocompass located on a camera device on the drone. An advantage of this arrangement is that the orientation of the drone can be calculated before the drone takes off.

BRIEF DESCRIPTION OF THE DRAWINGS

In the following the disclosure will be described in greater detail by means of preferred embodiments with reference to the accompanying drawings, in which

Figure 1 illustrates an airborne drone with a camera.
Figures 2a - 2c illustrate a stationary drone.

Figures 3a - 3d illustrated gyroscope orientations in the horizontal plane and bias error calculations.
Figure 4 illustrates a method.

DETAILED DESCRIPTION OF THE DISCLOSURE

This disclosure describes a method for determining the orientation of a drone. The drone comprises a main body. The drone also comprises a camera device. The camera device is attached to the main body with an attachment structure which allows the camera device to be moved in relation to the main body. The drone also comprises one or more MEMS gyroscopes on the camera device or the attachment structure.

The method comprises providing a control unit which is configured to retrieve measurement values from said one or more MEMS gyroscopes. The method also comprises retrieving in the control unit one or more first measurement values from said one or more MEMS gyroscopes when the camera device is in a first position in relation to the main body of the drone. The method also comprises shifting the camera device from the first position to a second position in relation to the main body of the drone. The method also comprises retrieving in the control unit one or more second measurement values from said one or more MEMS gyroscopes when the camera device is in the second position. The method also comprises calculating the orientation of the drone based on at least the one or more first measurement values and the one or more second measurement values. The first position differs from the second position, so the shifting of the camera device from the first position to the second position involves a change in the position of the camera device in relation to the main body of the drone.

The main body of the drone is stationary when the one or more first measurement values are retrieved in the control unit. In this disclosure, a drone is considered "stationary" when it does not move in relation to the surface of the Earth. The main body of the drone remains stationary when the camera device is shifted from the first position to the second position. The main body of the drone is also stationary when the one or more second measurement values are retrieved in the control unit, and when any optional additional measurements are performed in additional third, fourth, fifth, etc. positions. The drone may for example rest on a surface, hang from a launchpad or be held by human hands when the method is performed.

However, drones may remain stationary with respect to the surface of the Earth even when in flight. Consequently, the drone may alternatively hover over a certain point when the method is performed. Stationary hovering may for example be executed outdoors when the wind is calm or nonexistent, or indoors. Furthermore, the drone does not necessarily have to be stationary with respect to the surface of the Earth when the orientation of the drone is being determined. The drone may for example move in the vertical z-direction, perpendicular to the surface of the Earth, or even fly in the x- and/or y-directions, while the orientation of the drone is determined.

The calculation will typically be more reliable if the drone is resting on some kind of support when the orientation is determined. For simplicity, this disclosure will primarily discuss examples where methods are performed when a drone is resting on a surface. The method may in this case form a part of a launch procedure or takeoff procedure. However the measurement principles and practical embodiments presented in this disclosure apply equally to situations where the drone is in flight when the method is performed.

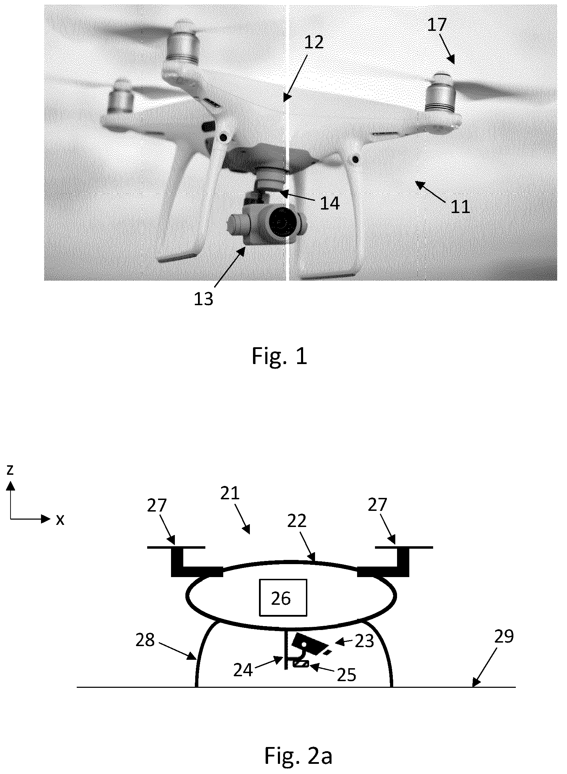

Figure 1 illustrates an airborne drone 11 with a main body 12 and a camera device 13. The camera device 13 is attached to the main body 12 with an attachment structure 14 which can either keep the camera device 13 stationary in relation to the main body 12 or move the camera device 13 in relation to the main body 12. The attachment structure may comprise a gimbal or some other multiaxial mechanism which allows the camera device to be oriented in any direction, or at least any direction below the main body 12.

The movement of the attachment structure 14 can be controlled by a control unit (not illustrated) which may be located within the main body 12 of the drone. The control unit can also perform many other functions, such as steering the flight of the drone in a selected direction by controlling the propellers 17. The drone may also comprise communication means which may (if the control unit is located on the drone) allow a user to send commands to the control unit and retrieve information from the control unit or (if the control unit is not located on the drone) allow the control unit to send commands to the attachment structure 14 and retrieve data from sensors which are located on the drone.

The control unit may be configured to stabilize the camera. The flightpath of a lightweight drone is usually not straight, since even small gusts of wind can alter its course and the user may send steering commands which produce sudden movement. Quick changes in the flightpath could severely degrade the quality of the images or video that the camera device 13 can record if the camera device would be rigidly fixed to a specific position.

However, one or more inertial measurement sensors may be placed in or on the camera device 13. The control unit may continuously monitor the movement of the camera device 13 by retrieving one or more corresponding motion signals from these sensors. The sensors may include stabilization gyroscopes and stabilization accelerometers.

The motion signals may indicate the linear and/or rotational movement that the camera device experiences at any moment. The control unit may be configured track the motion signals and to continuously adjust the position and orientation of the camera device 13 in relation to the main body 12 based on the retrieved motion signals. The control unit may transmit commands to the attachment structure 14 to achieve this purpose. The camera device 13 may thereby stabilized, so that it is kept level, pointing in the desired direction, even when the main body 12 undergoes sudden movement which temporarily shifts it away from the intended flightpath.

The control unit may also be configured to return the drone 11 back to the intended flightpath as soon as possible by controlling propellers 17. Additional gyroscopes and accelerometers, which also communicate with the control unit, may be included in the main body 12 of the drone 11 to achieve this flightpath control function.

A drone may rest on a surface before take-off. This is illustrated in figure 2a, where reference numbers 21, 22, 23, 24 and 27 correspond to reference numbers 11, 12, 13, 14 and 17, respectively, in figure 1. Figure 2a also illustrates the control unit 26 inside the main body 22, and leg supports 28 which may be in contact with the surface 29 when the drone is stationary. Even though the control unit is illustrated inside the main body in figure 2a, it does not necessarily have to be located on the drone, as explained in more detail below.

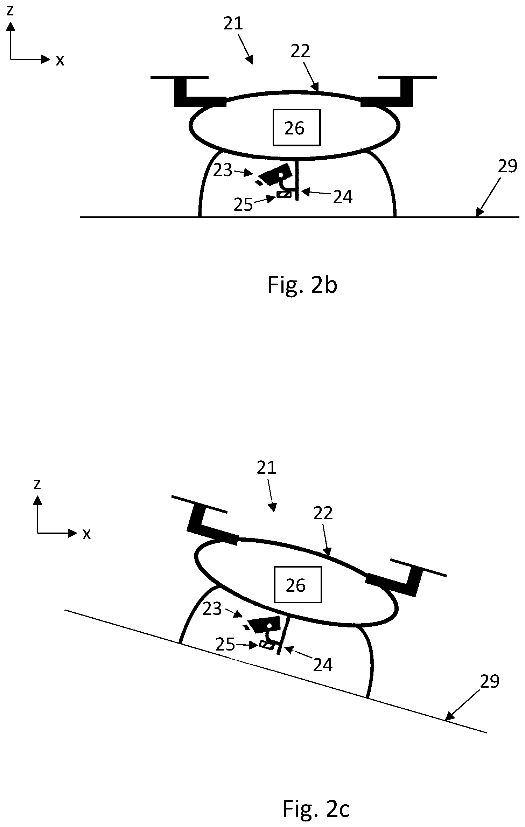

The x-axis in figure 2a, and in the other figures in this disclosure, illustrates an xy-plane (with the y-axis pointing into the page) which is parallel to the surface of the Earth at the place where the drone 21 is located. The xy-plane may be called the horizontal plane. The z-axis illustrates a direction which is vertical, i.e. perpendicular to the surface of the Earth at the place where the drone 21 is located. The surface 29 where the drone 21 rests in a stationary position may be horizontal, as figures 2a - 2b illustrate, but it may alternatively be tilted with respect to the surface of the Earth, as figure 2c illustrates.

Furthermore, as mentioned above, the drone 21 does not necessarily have to rest on a surface when the method described in this disclosure is performed. The drone could alternatively be hovering, flying, held by human hands, or it could hang from a launchpad which supports the weight of the drone from above, when the method is performed. The following discussion will refer to procedures for launching the drone from a surface, but it should be understood that the same methods can be used even when no surface is present.

The determination of drone orientation may for example comprise a determination of true north, which is the direction which is parallel to the Earth's surface and points toward the point where the Earth's rotation axis meets the surface of the Earth. Any other point of the compass could also be used as the reference direction.

The orientation is determined by measurements of rotation rate, performed by MEMS gyroscopes. When the control unit has determined the reference direction (for example true north), it can determine the direction in which the drone should be launched to immediately obtain a given geographical heading, such as southwest.

The method described in this disclosure, which is performed by the control unit, may form a part of a drone launch procedure. This procedure may be performed by the control unit before the drone is launched. The same procedure may for example include checks where the control unit determines before launch that all motors and propellers of the drone are fully functional, that all communication systems are operational, and other steps.

Alternatively or complementarily, the method described in this disclosure may form a part of a calibration or recalibration procedure which can be performed during a flight pause. In other words, a drone may be programmed to fly a predetermined route and to land somewhere along the route. The control unit may be configured to determine the orientation of the drone after the drone has landed, when it is stationary. The drone may take off again when the orientation has been determined. The control unit may be configured to adjust the flightpath of the drone based on the newly calibrated orientation information, so that the drone follows the predetermined route as accurately as possible. The method described in this disclosure can also be used for other purposes.

The drone in figure 2a comprises one or more MEMS gyroscopes 25. Each MEMS gyroscope may be a 1-axis gyroscope, which measures the rotation rate around one sense axis, or a 3-axis gyroscope which measures the rotation rate around three sense axes that are perpendicular to each other. If the one or more MEMS gyroscopes comprise more than one MEMS gyroscope, then some of these gyroscopes may be 1-axis gyroscopes, and others may be 3-axis gyroscopes. Alternatively, all gyroscopes may be either 1-axis gyroscopes or 3-axis gyroscopes.

Figure 2a illustrates a MEMS gyroscope 25 which is attached to the attachment structure 24. The MEMS gyroscope 25 could alternatively be attached to the camera device 23. The MEMS gyroscope is for illustrative purposes shown as a separate block in the figures of this disclosure, but it may in practice be built into the attachment structure 24 or into the camera device 23. Any MEMS gyroscope 25 described in this disclosure can and will be moved in relation to the main body 22 of the drone when the camera device 23 is moved in relation to the main body 22.

In this disclosure, the expression "the drone is stationary" refers to a situation where the main body 22 of the drone is stationary in relation to the surface of the Earth. By moving the camera device 23 to different positions when the drone is stationary, the one or more MEMS gyroscopes can be used to determine the orientation of the drone with respect to the Earth's rotation axis.

Figure 2b illustrates the drone in figure 2a after the camera device has been rotated 180 degrees about the z-axis. In other words, the shifting of the camera device from the first position to the second position may comprise rotation about a rotation axis which is perpendicular to the surface of the Earth. The shifting of the camera device from the first position to the second position may comprise a rotation of 180 degrees about said rotation axis.

In figures 2a - 2b, the drone 21 rests on a surface 29 which is parallel to the surface of the Earth, so the 180-degree rotation can be executed as a simple rotation of the attachment structure 24 in relation to the main body 22. If the drone rests on a tilted or uneven surface, as figure 2c illustrates, more complicated movements may be needed for rotation about a rotation axis which is perpendicular to the surface of the Earth. In some cases, the mechanism in the attachment structure may not be able to perform such a rotation. Nevertheless, the orientation of the drone can be determined even if the shifting of the camera device is not rotation about a rotation axis which is perpendicular to the surface of the Earth. The calculation which is needed to determine the orientation just becomes more complicated. The drone may comprise an inclinometer (not illustrated) which can be used to measure if and how much the main body 22 of the drone is tilted with respect to the horizontal plane. The control unit may be configured to retrieve data from the inclinometer when the method described in this disclosure is performed, and to use this data in the calculation where the orientation of the drone is determined.

The rotation rate of the Earth is known. The one or more MEMS gyroscopes are used to measure this rotation when the drone is stationary. The magnitude of the measured rotation depends on how the sense axis of the MEMS gyroscopes is oriented with respect to true north. The difference between true north direction and the sense axis of the gyroscope can therefore in principle be determined directly from a single gyroscope measurement.

However, the rotation rate of the Earth is slow, and measurements performed by MEMS gyroscopes typically includes a bias error which is greater than the signal amplitude caused by this rotation. The bias error therefore limits the ability of MEMS gyroscopes to determine the orientation of the drone. Separate measurements in a first and a second position are therefore used to eliminate the bias error. For example, a 180-degree shift from the first position (where the first measurement values are measured) to the second position (where the second measurement values are measured) can, in the subsequent calculation, effectively cancel the bias error. The shift can alternatively have some other magnitude than 180 degrees.

More accurate cancellation can be achieved by adding additional steps to the method. The camera device may for example be shifted to third, fourth, fifth... positions, and the control unit may retrieve corresponding third, fourth, fifth... measurement values from the one or more MEMS gyroscopes in these positions while the drone remains stationary. The control unit may then be configured to include these additional measurement values in the calculation of the orientation of the drone.

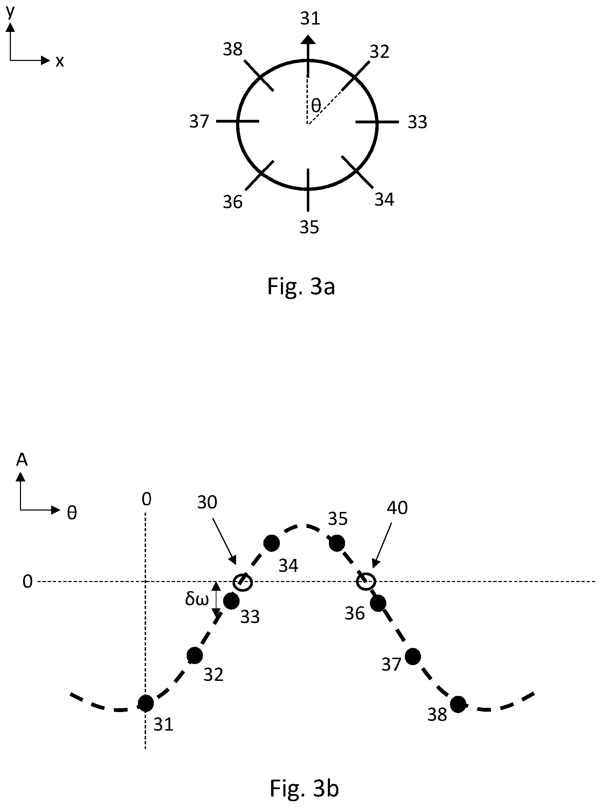

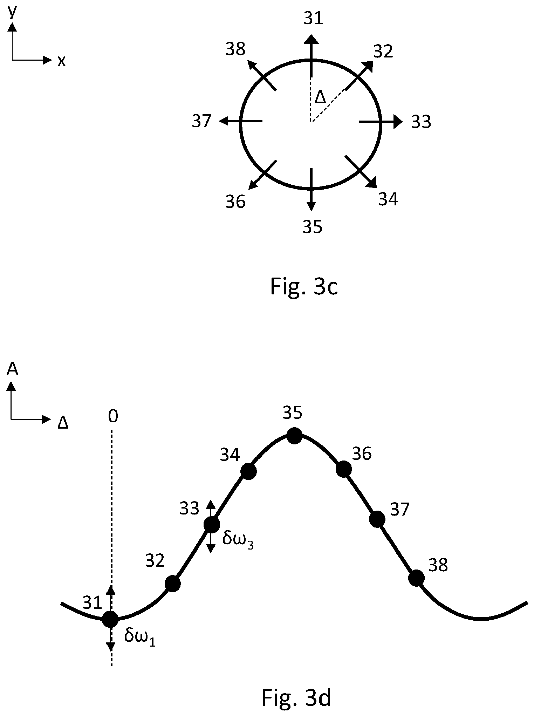

A method involving a single MEMS gyroscope and eight different positions has been schematically illustrated in figures 3a - 3b. The arrow 31 in figure 3a shows the orientation of one sense axis in the gyroscope (or the projection of the sense axis to the xy-plane, if the sense axis does not lie in the xy-plane) when the camera device is in its first position. Line 32 illustrates the orientation of the same sense axis in the xy-plane after the camera device has been shifted to the second position, and lines 33 - 38 illustrate the orientation of the same sense axis after the camera device has subsequently been shifted to a third, fourth, fifth, sixth, seventh and eighth position, respectively.

Figure 3b illustrates the amplitudes of the respective first, second, third... and eighth measurement signals retrieved from the MEMS gyroscope in these positions as they measure the rotation rate about the sense axis. Each data point 31- 38 has been acquired at the corresponding position in figure 3a. The amplitude variable has been plotted as a function of the shift angle $\theta$, which is approximately 45 degrees per shift in figure3a. The bias error $\delta\omega$ of the MEMS gyroscope can be estimated by fitting a sine curve to this data as illustrated, and evaluating how much the curve has been shifted along the A-axis ($\delta\omega$) for example by checking where the zero points 30 and 40 on this since curve are located. The sine curve may be of the form $A*sin(x+\theta)+\delta\omega$, where A is an Earth rotation amplitude projection to current latitude. Once the bias error has been estimated, the orientation of the gyroscope can be determined by determining the phase angle of the sine-curve. The maximum and minimum point north and south, while the zeros (bias reduced) point east and west.

As indicated above, the estimation could alternatively be conducted with just two of the eight data points 31 - 38 shown in figure 3b. In any embodiment presented in this disclosure, the magnitude of any shift in the position of the camera device may be measured by a gyroscope. If the one or more MEMS gyroscopes which are used to determine the orientation of the drone are 3-axis gyroscopes, then each shift angle $\theta$ may be measured by these gyroscopes (since one of the sense axes of the gyroscope is the z-axis). Alternatively, the drone may comprise other gyroscopes which are used for measuring the magnitude of each shift.

If the MEMS gyroscope is a 2-axis or 3-axis gyroscope which can measure the rotation rate about two perpendicular sense axes in the xy-plane, then measurement from both axes may be used when the calculation is performed. Furthermore, if the drone is tilted when the method is performed, as figure 2c illustrates, and if this tilt is measured with an inclinometer, then one of the two sense axes may be selected as the preferred sense axis based on the tilt, and measurements from this sense axis may be the only ones which are used in the calculation. The options described above apply also in the embodiment presented below, where multiple gyroscopes are used, if any or all of these multiple gyroscopes are 3-axis or 2-axis gyroscopes.

The one or more MEMS gyroscopes may alternatively comprise more than one gyroscope, with sense axes pointing in different directions in the horizontal plane. This facilitates a higher accuracy in the fitting of the sine curve and/or a reduction in the number of positional shifts. A single 180-degree shift may be used, and this may be sufficient to map the sine curve. The optimal number of shifts depends on the number of gyroscopes and on the desired accuracy.

A method involving eight MEMS gyroscopes, with eight sense axis pointing in different directions has been schematically illustrated in figures 3c - 3d. The arrow 31 in figure 3c shows the orientation of one sense axis in a first gyroscope (or the projection of the sense axis to the xy-plane, if the sense axis does not lie in the xy-plane), 32 the sense axis of the second gyroscope, 33 the sense axis of the third gyroscope, and so on. The sense axes point in these directions when the camera device is in its first position. Signal amplitudes obtained from these eight MEMS gyroscopes can be plotted as a function of the angle $\Delta$, illustrated in figure 3c. This angle indicates the angle difference between the sense axes 31 and 32 (and the corresponding difference between sense axes 31 and 33, 31 and 34, etc.) when the camera device is in its first position. By shifting the camera device to a second position (this shift has not been illustrated in figures 3c - 3d), performing the measurement again with each of the eight gyroscopes, The bias error can be removed by calculating the difference of the signal between the two positions. The bias is considered to be constant, and as a result is subtracted, while the signal caused by earth rotation, which is orientation-dependent remains. The true orientation can be extracted by fitting the data on to a correct function describing the difference.

In other words, the method may in this case comprise:

- Measuring each gyroscope signal $\omega_i$ in the first position:

$$\omega_{i,n-1} = A \sin(\theta_{n-1} + \varphi_i) + \delta\omega_i$$

Here A is the earth rotation amplitude projection to current latitude, $\theta$ the orientation of the device, $\varphi$ the relative orientation of the i:th gyroscope to the device, and $\delta\omega$ the offset for the i:th gyroscope.

- Shifting the camera device to the second position for example by rotating it by an angle $\alpha$ around the vertical axis.

- Measuring each gyroscope signal in the second position:

$$\omega_{i,n} = A \sin(\theta_n + \varphi_i) + \delta\omega_i$$

- Calculating the difference to remove the offset. The remaining part is from earth rotation:

$$\omega_{i,n} - \omega_{i,n-1} = (A \sin(\theta_n + \varphi_i) + \delta\omega_i) - (A \sin(\theta_{n-1} + \varphi_i + \alpha) + \delta\omega_i)$$

$$= A \left(\sin(\theta_n + \varphi_i) - \sin(\theta_{n-1} + \varphi_i + \alpha)\right)$$

Here $\alpha$ (the rotation about the vertical axis between the two positions) has been added to the n-1 measurement to indicate the shift. For all gyroscopes i, the calculated difference is caused (ideally) by earth rotation. This function can be used to fit the data to obtain A, $\theta$. $\Phi$ is known from geometry and $\alpha$ can be obtained by any means described in this disclosure. In the special case where $\alpha$=180°, the equation reduces to $2A \sin(\theta + \varphi_i)$.

As in the previous example, if at least some of the MEMS gyroscopes are 3-axis gyroscopes, then each shift angle $\theta$ may be measured by those gyroscopes. This measurement may be included in the orientation calculation.

Optionally, the angles of the sense axes of the one or more MEMS gyroscopes may be angled at regular intervals of 360/N, where N is the number of gyroscopes. N may be an even number such that the sense axes of the one or more MEMS gyroscopes are arranged into pairs, wherein the sense axes in each pair are offset by 180 degrees.

The control unit may be configured to retrieve values for the bias error of each of the sense axes of the one or more MEMS gyroscopes in a lookup table stored in a memory unit, and to subtract the bias error from the received rotation rates before determining the heading of the device.

The control unit may be configured to retrieve values from the lookup table based on the sum of at least two of the received rotation rates, wherein the at least two received rotation rates are received from sense axes arranged at regular intervals around 360 degrees such that the component of the Earth's rotation in the rate signals is cancelled in the sum of the at least two received rotation rates.

The control unit may be configured to determine the orientation of the drone by fitting a sine or cosine function to the received rotation rates. The sine or cosine function may be fit to the received rotation rates using a least squares mean or other fitting method.

The drone may further comprise a GNSS receiver or a connection for communicating with a GNSS receiver, and prior to sine fitting the received rotation rates, the control unit may be configured to receive the latitude of the device from the GNSS receiver; and calculate the amplitude of the sine function based on the received latitude. The control unit may be configured to determine the heading of the device when the range of values of the received rotation rates is below a threshold. The threshold may be at least 10 times the root mean square error of the received rotation rates.

The drone may further comprises a GNSS receiver or a connection for communicating with a GNSS receiver and an inertial measurement unit, and the control unit may be configured to calculate a heading based on the output of the GNSS receiver and the inertial measurement unit; average the rotation rates of the sense axes received from the one or more MEMS gyroscopes over time; calculate the component of the Earth's rotation felt by each sense axis of the one or more MEMS gyroscopes based on the heading calculated based on the output of the GNSS receiver and inertial measurement unit; and determine the bias error of each sense axis of the one or more MEMS gyroscopes by subtracting the calculated component of the Earth's rotation for each sense axis from the average received rotation rate of the sense axis.

The control unit may be configured to determine the orientation of the drone by receiving first rotation rates from the one or more MEMS gyroscopes at a first position; measuring the shift of the one or more MEMS gyroscopes from the first position to a second position; receiving second rotation rates from the one or more MEMS gyroscopes at the second position; calculating a differential rotation rate for each sense axis of the one or more MEMS gyroscopes by subtracting the second received rotation rate of the sense axis received from the MEMS gyroscope from the first received rotation rate of the sense axis received from the MEMS gyroscope or vice versa; and fitting the differential rotation rates to a sine or cosine function to determine a phase offset of the sine or cosine function, wherein the phase offset corresponds to the heading of the device.

The control unit may be configured to receive multiple first and second rotation rates for each sense axis of the one or more MEMS gyroscopes and to average the received rotation rates over time.

The drone may comprise two MEMS gyroscopes, wherein the MEMS gyroscopes include at least two sense axes that lie in the horizontal plane perpendicular to one another, and where, in the shift from the first position to the second position, the two MEMS gyroscopes are rotated by 180 degrees with respect to one another such that the sense axes of the MEMS gyroscopes are arranged at 90-degree intervals.

In any embodiment presented in this disclosure, the shifting of the camera device in relation to the main body may be performed manually. In other words, a user may grab the camera device and shift it from the first position to the second position, and to subsequent additional positions. The magnitude of this shift may optionally be measured by the one or more MEMS gyroscopes, as explained above.

Alternatively, the control unit may be configured to adjust the position of the camera device in relation to the main body, and the shifting of the camera device from the first position to the second position may be performed by the control unit.

Optionally, the one or more MEMS gyroscopes which are used by the control unit to determine the orientation of the drone may be the same gyroscopes which the control unit uses to stabilize the camera device. In other words, the one or more MEMS gyroscopes may be stabilization gyroscopes, and the control unit may be configured use the one or more MEMS gyroscopes for stabilizing the camera device when the drone is in flight.

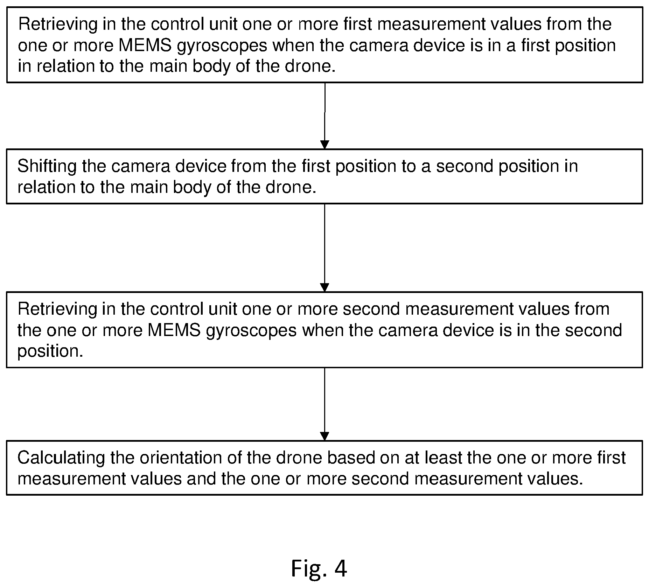

Figure 4 illustrates the method described in this disclosure. The method may be a computer-implemented method. All calculations described in this disclosure may be performed by the control unit. The results of the calculations may be stored in a memory unit. The control unit may be a part of a computer.

As used herein, the term computer refers to physical or virtual computational entities capable of enhancing information and to perform computational tasks.

The drone may comprise a drone control application running in the control unit on a computer. The computer may be present in the drone, or it may be a cloud-based service located somewhere else. In either case, the user interface of the drone may be a control panel which runs on a portable computer such as a phone or a tablet. The user interface may allow the user to send instructions to the control unit.

The computer where the control unit is located may alternatively be a portable user device, such as a phone, a tablet or any other portable computer.

This disclosure also presents a computer program product comprising executable instructions which, when executed by a processor, cause the processor to perform a method described in this disclosure. The processor may be located in the control unit.

As used herein, the term computer program product refers to a proprietary software enabling a computer or computer system to perform a particular computer-implemented task or tasks. The program product, which may also be called an application, a software application, application program, application software, or app, for example. In at least some of the example embodiments, system software providing a platform for running the application can be considered functionally similar to the application, or as a part of the application. Alternatively or complementarily, a set of instructions based on a mark-up language may also be considered an application. The application may be used on a computer or computing device, in several such devices, on a server or several servers. The program product may utilize cloud computing.

The computer program product may be stored on a computer-readable medium. As used herein, a "computer-readable medium" can be any means that can contain, store, communicate, propagate or transport the program for use by or in connection with the instruction execution system, apparatus or device. The computer readable medium can be, for example, but not limited to, an electronic, magnetic, optical, electromagnetic, infrared or semiconductor system, apparatus, device or propagation medium. A non-exhaustive list of more specific examples of the computer-readable medium can include the following: an electrical connection having one or more wires, a portable computer diskette or memory device, a random-access memory (RAM), a read-only memory (ROM), an erasable programmable read-only memory (EPROM or Flash memory), an optical fibre, and a portable compact disc read-only memory (CDROM).

Finally, this disclosure also presents in figures 2a - 2c an arrangement comprising a drone 21 with a main body 22 and a camera device 23. The camera device 23 is attached to the main body 22 with an attachment structure 24 which allows the camera device 23 to be moved in relation to the main body 22. The drone 21 also comprises one or more MEMS gyroscopes 25 in the camera device 23 or the attachment structure 24. The arrangement also comprises a control unit 26, which is configured to perform any method described in this disclosure. In other words, the control unit is configured to retrieve measurement values from said one or more MEMS gyroscopes 25. The control unit 26 is configured to determine the orientation of the drone 21 based on the measurement values retrieved from the one or more MEMS gyroscopes 25. The control unit is also configured to perform the other method steps mentioned above. As explained previously, the control unit 26 may be located in the drone 21 (as figures 2a - 2c), but it may alternatively be located somewhere else and connected to the drone with a communication link which allows the control unit to send and retrieve data to and from the various parts of the drone.

**Claims**

1. A method for determining the orientation of a drone (21), wherein the drone comprises

   - a main body (22),
   - a camera device (23), wherein the camera device is attached to the main body with an attachment structure (24) which allows the camera device to be moved in relation to the main body,
   - one or more MEMS gyroscopes (25) on the camera device or the attachment structure,
   whereby the method comprises
   - providing a control unit (26) which is configured to retrieve measurement values from said one or more MEMS gyroscopes (25)
   - retrieving in the control unit (26) one or more first measurement values from said one or more MEMS gyroscopes (25) when the camera device (23) and the one or more MEMS gyroscopes are in a first position in relation to the main body (22) of the drone and the main body (22) of the drone (21) is stationary,
   - shifting the camera device (23) and the one or more MEMS gyroscopes from the first position to a second position in relation to the main body (22) of the drone while the main body (22) of the drone is stationary,
   - retrieving in the control unit (26) one or more second measurement values from said one or more MEMS gyroscopes (25) when the camera device (23) and the one or more MEMS gyroscopes are in the second position and the main body of the drone is stationary, and
   - calculating the orientation of the drone (21) based on at least the one or more first measurement values and the one or more second measurement values.

2. A method according to claim 1, wherein the shifting of the camera device (23) from the first position to the second position comprises rotation about a rotation axis which is perpendicular to the surface of the Earth.

3. A method according to claim 2, wherein the shifting of the camera device (23) from the first position to the second position comprises a rotation of 180 degrees about said rotation axis.

4. A method according to any of claims 1-3, wherein the control unit (26) is also configured to adjust the position of the camera device (23) in relation to the main body, and the shifting of the camera device from the first position to the second position is performed by the control unit.

5. A method according to any of claims 1-4, wherein the one or more MEMS gyroscopes (25) are stabilization gyroscopes, and the control unit is configured to use the one or more MEMS gyroscopes for stabilizing the camera device (23) when the drone is in flight.

6. A computer program product comprising executable instructions which, when executed by a processor, cause the processor to perform the method of any one of claims 1 to 5.

7. An arrangement comprising a drone (21) with

- a main body (22),
- a camera device (23), wherein the camera device is attached to the main body with an attachment structure (24) which allows the camera device to be moved in relation to the main body,
- one or more MEMS gyroscopes (25) in the camera device or the attachment structure,

wherein the arrangement also comprises a control unit (26) which is configured to retrieve measurement values from said one or more MEMS gyroscopes (25),

whereby the control unit (26) is configured to

- retrieve one or more first measurement values from said one or more MEMS gyroscopes (25) when the camera device (23) and the one or more MEMS gyroscopes are in a first position in relation to the main body (22) of the drone (21) and the main body (22) of the drone is stationary,
- shift the camera device (23) and the one or more MEMS gyroscopes from the first position to a second position in relation to the main body (22) of the drone while the main body (22) of the drone is stationary,
- retrieve one or more second measurement values from said one or more MEMS gyroscopes (25) when the camera device (23) and the one or more MEMS gyroscopes are in the second position and the main body of the drone is stationary, and
- calculate the orientation of the drone (21) based on at least the one or more first measurement values and the one or more second measurement values.

## Patentansprüche

1.  Verfahren zur Bestimmung der Ausrichtung einer Drohne (21), wobei die Drohne Folgendes umfasst:

    - einen Hauptkörper (22),
    - eine Kameravorrichtung (23), wobei die Kameravorrichtung am Hauptkörper mit einer Anbringungsstruktur (24) angebracht ist, die es ermöglicht, dass die Kameravorrichtung im Verhältnis zum Hauptkörper bewegt wird,
    - ein oder mehrere MEMS-Gyroskope (25) an der Kameravorrichtung oder Anbringungsstruktur,

    wobei das Verfahren umfasst:

    - Bereitstellen einer Steuerungseinheit (26), die dazu ausgelegt ist, Messwerte aus dem einen oder den mehreren MEMS-Gyroskopen (25) abzurufen,
    - in der Steuerungseinheit (26), Abrufen eines oder mehrerer erster Messwerte aus dem einen oder den mehreren MEMS-Gyroskopen (25), wenn sich die Kameravorrichtung (23) und das eine oder die mehreren MEMS-Gyroskope in einer ersten Position im Verhältnis zum Hauptkörper (22) der Drohne befinden und der Hauptkörper (22) der Drohne (21) stationär ist,
    - Verschieben der Kameravorrichtung (23) und des einen oder der mehreren MEMS-Gyroskope von der ersten Position zu einer zweiten Position im Verhältnis zum Hauptkörper (22) der Drohne, während der Hauptkörper (22) der Drohne stationär ist,
    - in der Steuerungseinheit (26), Abrufen eines oder mehrerer zweiter Messwerte aus dem einen oder den mehreren MEMS-Gyroskopen (25), wenn sich die Kameravorrichtung (23) und das eine oder die mehreren MEMS-Gyroskope in der zweiten Position befinden und der Hauptkörper der Drohne stationär ist, und
    - Berechnen der Ausrichtung der Drohne (21) auf Grundlage mindestens der einen oder mehreren ersten Messwerte und der einen oder mehreren zweiten Messwerte.

2.  Verfahren nach Anspruch 1, wobei das Verschieben der Kameravorrichtung (23) von der ersten Position zur zweiten Position ein Drehen um eine senkrecht zur Erdoberfläche stehende Rotationsachse umfasst.

3.  Verfahren nach Anspruch 2, wobei das Verschieben der Kameravorrichtung (23) von der ersten Position zu der zweiten Position ein Drehen von 180 Grad um die Rotationsachse umfasst.

4.  Verfahren nach einem der Ansprüche 1- 3, wobei die Steuerungseinheit (26) auch dazu ausgelegt ist, die Position der Kameravorrichtung (23) im Verhältnis zum Hauptkörper zu verstellen, und das Verschieben der Kameravorrichtung von der ersten Position zur zweiten Position durch die Steuerungseinheit ausgeführt wird.

5.  Verfahren nach einem der Ansprüche 1 bis 4, wobei es sich bei dem einen oder den mehreren MEMS-Gyroskopen (25) um Stabilisierungsgyroskope handelt, und die Steuerungseinheit dazu ausgelegt ist, das eine oder die mehreren MEMS-Gyroskope zum Stabilisieren der Kameravorrichtung (23) verwenden, wenn sich die Drohne im Flug befindet.

6. Computerprogrammprodukt, das ausführbare Anweisungen umfasst, die, wenn sie durch einen Prozessor ausgeführt werden, den Prozessor dazu veranlassen, das Verfahren nach einem der Ansprüche 1 bis 5 auszuführen.

7. Anordnung umfassend eine Drohne (21) mit

- einem Hauptkörper (22),
- einer Kameravorrichtung (23), wobei die Kameravorrichtung am Hauptkörper mit einer Anbringungsstruktur (24) angebracht ist, die es ermöglicht, dass die Kameravorrichtung im Verhältnis zum Hauptkörper bewegt wird,
- einem oder mehreren MEMS-Gyroskopen (25) in der Kameravorrichtung oder Anbringungsstruktur,
wobei die Anordnung auch eine Steuerungseinheit (26) umfasst, die dazu ausgelegt ist, Messwerte aus dem einen oder den mehreren MEMS-Gyroskopen (25) abzurufen,
wobei die Steuereinheit (26) ausgelegt ist zum:

- Abrufen eines oder mehrerer erster Messwerte aus dem einen oder den mehreren MEMS-Gyroskopen (25), wenn sich die Kameravorrichtung (23) und das eine oder die mehreren MEMS-Gyroskope in einer ersten Position im Verhältnis zum Hauptkörper (22) der Drohne (21) befinden und der Hauptkörper (22) der Drohne stationär ist,
- Verschieben der Kameravorrichtung (23) und des einen oder der mehreren MEMS-Gyroskope von der ersten Position zu einer zweiten Position im Verhältnis zum Hauptkörper (22) der Drohne, während der Hauptkörper (22) der Drohne stationär ist,
- Abrufen eines oder mehrerer zweiter Messwerte aus dem einen oder den mehreren MEMS-Gyroskopen (25), wenn sich die Kameravorrichtung (23) und das eine oder die mehreren MEMS-Gyroskope in der zweiten Position befinden und der Hauptkörper der Drohne stationär ist, und
- Berechnen der Ausrichtung der Drohne (21) auf Grundlage mindestens der einen oder mehreren ersten Messwerte und der einen oder mehreren zweiten Messwerte.

**Revendications**

1. Procédé pour déterminer l'orientation d'une drone (21), dans lequel la drone comprend

- un corps principal (22),
- un dispositif de caméra (23), le dispositif de caméra étant fixé au corps principal avec une structure de fixation (24) qui autorise le mouvement du dispositif de caméra par rapport au corps principal,
- un ou plusieurs gyroscopes MEMS (25) sur le dispositif de caméra ou la structure de fixation,

le procédé comprenant les étapes consistant

- fournir une unité de commande (26) qui est configurée pour récupérer des valeurs mesurées desdits un ou plusieurs gyroscopes MEMS (25),
- récupérer, dans l'unité de commande (26), une ou plusieurs premières valeurs mesurées desdits un ou plusieurs gyroscopes MEMS (25) lorsque le dispositif de caméra (23) et lesdits un ou plusieurs gyroscopes MEMS sont dans une première position par rapport au corps principal (22) de la drone et le corps principal (22) de la drone (21) est stationnaire,
- déplacer le dispositif de caméra (23) et lesdits un ou plusieurs gyroscopes MEMS de la première position à une deuxième position par rapport au corps principal (22) de la drone pendant que le corps principal (22) de la drone est stationnaire,
- récupérer, dans l'unité de commande (26), une ou plusieurs deuxièmes valeurs mesurées desdits un ou plusieurs gyroscopes MEMS (25) lorsque le dispositif de caméra (23) et lesdits un ou plusieurs gyroscopes MEMS sont dans la deuxième position et le corps principal de la drone est stationnaire, et
- calculer l'orientation de la drone (21) au moins sur la base desdites une ou plusieurs premières valeurs mesurées et desdites une ou plusieurs deuxièmes valeurs mesurées.

2. Procédé selon la revendication 1, dans lequel le déplacement du dispositif de caméra (23) de la première position à la deuxième position comprend une rotation autour d'un axe de rotation perpendiculaire à la surface terrestre.

3. Procédé selon la revendication 2, dans lequel le déplacement du dispositif de caméra (23) de la première position à la deuxième position comprend une rotation de 180 degrés autour dudit axe de rotation.

4. Procédé selon l'une des revendications 1 à 3, dans lequel l'unité de commande (26) est également configurée pour ajuster la position du dispositif de caméra (23) par rapport au corps principal, et le décalage du dispositif de caméra de la première position à la deuxième position est effectué par l'unité de commande.

5. Procédé selon l'une des revendications 1 à 4, dans lequel lesdits un ou plusieurs gyroscopes MEMS (25) sont des gyroscopes de stabilisation, et l'unité de commande est configurée pour utiliser lesdits un ou plusieurs gyroscopes MEMS pour stabiliser le dispositif de caméra (23) lorsque le drone est en vol.

6. Produit de programme informatique comprenant des instructions exécutables qui, lorsqu'elles sont exécutées par un processeur, amènent le processeur à effectuer le procédé selon l'une des revendications 1 à 5.

7. Agencement comprenant une drone (21) avec

   - un corps principal (22),
   - un dispositif de caméra (23), le dispositif de caméra étant fixé au corps principal avec une structure de fixation (24) qui autorise le mouvement du dispositif de caméra par rapport au corps principal,
   - un ou plusieurs gyroscopes MEMS (25) sur le dispositif de caméra ou la structure de fixation,
   dans lequel l'agencement comprend également une unité de commande (26) qui est configurée pour récupérer des valeurs mesurées desdits un ou plusieurs gyroscopes MEMS (25),
   l'unité de commande (26) étant configurée pour

   - récupérer une ou plusieurs premières valeurs mesurées desdits un ou plusieurs gyroscopes MEMS (25) lorsque le dispositif de caméra (23) et lesdits un ou plusieurs gyroscopes MEMS sont dans une première position par rapport au corps principal (22) de la drone (21) et le corps principal (22) de la drone est stationnaire,
   - déplacer le dispositif de caméra (23) et lesdits un ou plusieurs gyroscopes MEMS de la première position à une deuxième position par rapport au corps principal (22) de la drone pendant que le corps principal (22) de la drone est stationnaire,
   - récupérer une ou plusieurs deuxièmes valeurs mesurées desdits un ou plusieurs gyroscopes MEMS (25) lorsque le dispositif de caméra (23) et lesdits un ou plusieurs gyroscopes MEMS sont dans la deuxième position et le corps principal de la drone est stationnaire, et
   - calculer l'orientation de la drone (21) au moins sur la base desdites une ou plusieurs premières valeurs mesurées et desdites une ou plusieurs deuxièmes valeurs mesurées.

Fig. 1

Fig. 2a

Fig. 2b

Fig. 2c

Fig. 3a

Fig. 3b

Fig. 3c

Fig. 3d

Retrieving in the control unit one or more first measurement values from the one or more MEMS gyroscopes when the camera device is in a first position in relation to the main body of the drone.

Shifting the camera device from the first position to a second position in relation to the main body of the drone.

Retrieving in the control unit one or more second measurement values from the one or more MEMS gyroscopes when the camera device is in the second position.

Calculating the orientation of the drone based on at least the one or more first measurement values and the one or more second measurement values.

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017094000 A

**Non-patent literature cited in the description**

- What is MEMS Gyrocompassing? Comparative Analysis of May tagging and Carouseling. **PRIKHODKO IGOR P et al.** JOURNAL OF MICROELECTROMECHANICAL SYSTEMS. IEEE SERVICE CENTER, 01 December 2013, vol. 22, 1257-1266